(19) Europäisches Patentamt
European Patent Office
Office européen des brevets

(11) **EP 4 434 669 A1**

(12) **EUROPEAN PATENT APPLICATION**
published in accordance with Art. 153(4) EPC

(43) Date of publication:
**25.09.2024 Bulletin 2024/39**

(21) Application number: **22911869.0**

(22) Date of filing: **20.12.2022**

(51) International Patent Classification (IPC):
**B23K 35/30** $^{(2006.01)}$      **B23K 9/16** $^{(2006.01)}$

(52) Cooperative Patent Classification (CPC):
**B23K 9/16; B23K 35/30**

(86) International application number:
**PCT/KR2022/020863**

(87) International publication number:
**WO 2023/121236 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2021 KR 20210184090**

(71) Applicant: **POSCO Co., Ltd
Pohang-si, Gyeongsangbuk-do 37859 (KR)**

(72) Inventors:
• **HAN, Kyutae
  Pohang-si Gyeongsangbuk-do 37669 (KR)**
• **HWANG, Wontaek
  Pohang-si Gyeongsangbuk-do 37667 (KR)**
• **JEONG, Boyoung
  Pohang-si Gyeongsangbuk-do 37884 (KR)**

(74) Representative: **Meissner Bolte Partnerschaft
mbB
Patentanwälte Rechtsanwälte
Postfach 86 06 24
81633 München (DE)**

(54) **HIGH-STRENGTH WELDED JOINT HAVING IMPROVED HIGH-HEAT-INPUT TOUGHNESS**

(57)    In the present specification, disclosed is a high-strength welded joint having improved high-heat-input toughness by controlling a microstructure. The high-strength welded joint having improved high-heat-input toughness, according to an embodiment of the present disclosure, may include, in percent by weight (wt%), at least 0.03% but not more than 0.045% of C, at least 1.45% but not more than 1.55% of Mn, at least 0.3% but not more than 0.4% of Si, at least 0.02% but not more than 0.03% of Al, at least 1.55% but not more than 1.70% of Ni, at least 0.05% but not more than 0.07% of Cr, at least 0.05% but not more than 0.08% of Cu, at least 0.14% but not more than 0.2% of Mo, at least 0.06% but not more than 0.07% of Ti, at least 0.004% but not more than 0.005% of Nb, at least 0.035% but not more than 0.05% of O, at least 40 ppm but not more than 180 ppm of N, more than 0 ppm but not more than 80 ppm of P, more than 0 ppm but not more than 90 ppm of S, and the balance being iron (Fe) and other inevitable impurities.

EP 4 434 669 A1

**Description**

[Technical Field]

The present disclosure relates to a high-strength welded joint having improved high-heat-input toughness, and more particularly, to a high-strength welded joint having improved high-heat-input toughness obtained by controlling a microstructure.

[Background Art]

Recently, as Earth's temperature has risen due to global warming, Arctic sea ice extent rapidly decreases, and thus interest in launching Arctic routes is increasing. In order to travel the Arctic routes, it is essential to build icebreakers that break sea ice and open a sea route.

Steel materials used in the hull of an icebreaker should have excellent impact toughness at a low temperature and are required to have high strength to protect the hull from impact during icebreaking. Therefore, steel materials and welded joints for ice breakers need to be composed of fine, high-strength, low-temperature transformed phases, and large amounts of alloying elements are added for this purpose.

Recently, shipbuilders are continuously requesting steel materials and welded joints applicable to electro-gas welding to improve productivity when building icebreakers. However, in the case of adding large amounts of alloying elements, a bainite single phase is formed in a welded joint and a heat-affected region, causing a problem of rapidly deteriorating toughness of a welded part. Therefore, there are no inventions about a high-strength steel material for high-heat-input welding available for electro-gas welding and a welded joint.

[Disclosure]

[Technical Problem]

The present disclosure has been proposed to solve the above-described problems, and provided are a high-strength welded joint having improved high-heat-input toughness and realizing both low-temperature impact toughness and high strength by refining crystal grains by maximizing a fraction of acicular ferrite, minimizing a fraction of grain boundary ferrite and a fraction of upper bainite, and a method for manufacturing the same.

[Technical Solution]

A high-strength welded joint having improved high-heat-input toughness according to an embodiment of the present disclosure may include, in percent by weight (wt%), at least 0.03% but not more than 0.045% of C, at least 1.45% but not more than 1.55% of Mn, at least 0.3% but not more than 0.4% of Si, at least 0.02% but not more than 0.03% of Al, at least 1.55% but not more than 1.70% of Ni, at least 0.05% but not more than 0.07% of Cr, at least 0.05% but not more than 0.08% of Cu, at least 0.14% but not more than 0.2% of Mo, at least 0.06% but not more than 0.07% of Ti, at least 0.004% but not more than 0.005% of Nb, at least 0.035% but not more than 0.05% of O, at least 40 ppm but not more than 180 ppm of N, more than 0 ppm but not more than 80 ppm of P, more than 0 ppm but not more than 90 ppm of S, and the balance being iron (Fe) and other inevitable impurities, and have, in area fraction, 85% or more of acicular ferrite, 14% or less of grain boundary ferrite, and 0.1% or less of upper bainite.

In addition, the high-strength welded joint having improved high-heat-input toughness according to an embodiment of the present disclosure may have a carbon equivalent (Ceq), represented by Expression (1) below, of at least 0.45% but not more than 0.50%.

$$\text{Expression (1): } [C]+[Mn]/6+(Cr+Mo)/5+(Ni+Cu)/15$$

In Expression (1), C, Mn, Cr, Mo, Ni, and Cu represent contents of the elements, respectively.

In addition, the high-strength welded joint having improved high-heat-input toughness according to an embodiment of the present disclosure may have 0.5% or less of a martensite island-austenite (MA) phase.

In addition, the high-strength welded joint having improved high-heat-input toughness according to an embodiment of the present disclosure may have a yield strength of 500 MPa or more.

In addition, the high-strength welded joint having improved high-heat-input toughness according to an embodiment of the present disclosure may have a tensile strength of 610 to 770 MPa.

In addition, the high-strength welded joint having improved high-heat-input toughness according to an embodiment of the present disclosure may have an elongation of 21% or more.

In addition, the high-strength welded joint having improved high-heat-input toughness according to an embodiment of the present disclosure may have a -20°C impact toughness 50 J or more.

In addition, a method for manufacturing a high-strength welded joint having improved high-heat-input toughness according to an embodiment of the present disclosure includes performing electro-gas welding on a steel material including, in percent by weight (wt%), at least 0.03% but not more than 0.045% of C, at least 1.45% but not more than 1.55% of Mn, at least 0.3% but not more than 0.4% of Si, at least 0.02% but not more than 0.03% of Al, at least 1.55% but not more than 1.70% of Ni, at least 0.05% but not more than 0.07% of Cr, at least 0.05% but not more than 0.08% of Cu, at least 0.14% but not more than 0.2% of Mo, at least 0.06% but not more than 0.07% of Ti, at least 0.004% but not more than 0.005% of Nb, at least 0.035% but not more than 0.05% of O, at least 40 ppm but not more than 180 ppm of N, more than 0 ppm but not more than 80 ppm of P, more than 0 ppm but not more than 90 ppm of S, and the balance being iron (Fe) and other inevitable impurities, and having a carbon equivalent (Ceq), represented by Expression (1) below, of at least 0.45% but not more than 0.50%.

$$\text{Expression (1): } [C]+[Mn]/6+(Cr+Mo)/5+(Ni+Cu)/15$$

In Expression (1), C, Mn, Cr, Mo, Ni and Cu represent contents of the elements, respectively.

In addition, in the method for manufacturing a high-strength welded joint having improved high-heat-input toughness according to an embodiment of the present disclosure, the electro-gas welding may be performed with a heat input capacity of 160 KJ/cm or more.

[Advantageous Effects]

According to an embodiment of the present disclosure, provided are a high-strength welded joint having improved high-heat-input toughness and realizing both low-temperature impact toughness and high strength by refining crystal grains by maximizing a fraction of acicular ferrite, minimizing a fraction of grain boundary ferrite and a fraction of upper bainite, and a method for manufacturing the same.

[Best Mode]

A high-strength welded joint having improved high-heat-input toughness according to an embodiment of the present disclosure includes, in percent by weight (wt%), at least 0.03% but not more than 0.045% of C, at least 1.45% but not more than 1.55% of Mn, at least 0.3% but not more than 0.4% of Si, at least 0.02% but not more than 0.03% of Al, at least 1.55% but not more than 1.70% of Ni, at least 0.05% but not more than 0.07% of Cr, at least 0.05% but not more than 0.08% of Cu, at least 0.14% but not more than 0.2% of Mo, at least 0.06% but not more than 0.07% of Ti, at least 0.004% but not more than 0.005% of Nb, at least 0.035% but not more than 0.05% of O, at least 40 ppm but not more than 180 ppm of N, more than 0 ppm but not more than 80 ppm of P, more than 0 ppm but not more than 90 ppm of S, and the balance being iron (Fe) and other inevitable impurities, and having, in area fraction, 85% or more of acicular ferrite, 14% or less of grain boundary ferrite, and 0.1% or less of upper bainite.

[Modes of the Invention]

Hereinafter, embodiments of the present disclosure will be described in detail with reference to the accompanying drawings. The following embodiments are provided to fully convey the spirit of the present disclosure to a person having ordinary skill in the art to which the present disclosure belongs. The present disclosure is not limited to the embodiments shown herein but may be embodied in other forms. In the drawings, parts unrelated to the descriptions are omitted for clear description of the disclosure and sizes of elements may be exaggerated for clarity.

Throughout the specification, the term "include" an element does not preclude other elements but may further include another element, unless otherwise stated.

As used herein, the singular forms are intended to include the plural forms as well, unless the context clearly indicates otherwise.

Hereinafter, reasons for numerical limitations on the contents of alloying elements in the embodiment of the present disclosure will be described. Hereinafter, the unit is wt% unless otherwise stated.

A high-strength welded joint having improved high-heat-input toughness according to an embodiment of the present disclosure may include, in percent by weight (wt%), at least 0.03% but not more than 0.045% of C, at least 1.45% but not more than 1.55% of Mn, at least 0.3% but not more than 0.4% of Si, at least 0.02% but not more than 0.03% of Al, at least 1.55% but not more than 1.70% of Ni, at least 0.05% but not more than 0.07% of Cr, at least 0.05% but not more than 0.08% of Cu, at least 0.14% but not more than 0.2% of Mo, at least 0.06% but not more than 0.07% of Ti, at least 0.004% but not more than 0.005% of Nb, at least 0.035% but not more than 0.05% of O, at least 40 ppm but not more than 180 ppm of N, more than 0 ppm but not more than 80 ppm of P, more than 0 ppm but not more than 90 ppm of S, and the balance being iron (Fe) and other inevitable impurities.

The content of carbon (C) may be at least 0.03% but not more than 0.045%.

C is an element effective for increasing strength of a material due to solid solution strengthening. In consideration thereof, C may be added in an amount of 0.03% or more. However, an excess of C may excessively improve hardening ability to increase a fraction of upper bainite. In addition, if the C content is excessive, a large amount of martensite island phase is generated to reduce toughness. In consideration thereof, an upper limit of the C content may be controlled to 0.045%. Preferably, the C content may be at least 0.032% but not more than 0.043%.

The content of manganese (Mn) may be at least 1.45% but not more than 1.55%.

Mn is an element effective for improving hardening ability to improve strength due to solid solution strengthening and form low-temperature transformed phase. In consideration thereof, Mn may be added in an amount of 1.45% or more. However, an excess of Mn may excessively increase hardening ability to promote formation of upper bainite and martensite islands in a welded part affected by heat and a matrix due to an excessive increase in hardening ability. Therefore, if the Mn content is excessive, impact toughness may significantly decrease. In consideration thereof, an upper limit of the Mn content may be controlled to 1.55%. Preferably, the Mn content may be at least 1.49% but not more than 1.55%.

The content of silicon (Si) may be at least 0.3% but not more than 0.4% or less.

Si is an essential element for deoxidation by precipitating dissolved oxygen in the form of slag during a steelmaking process and in a welded joint. In consideration thereof, Si may be added in an amount of 0.3% or more. However, if the Si content is excessive, a coarse oxide may be formed or a large amount of non-metal inclusions or coarse martensite islands may be formed in a microstructure. In consideration thereof, an upper limit of the Si content may be controlled to 0.4%. Preferably, the Si content may be at least 0.34% but not more than 0.4%.

The content of aluminum (Al) may be at least 0.02% but not more than 0.03%.

Al, like Si, is an element effective for deoxidation. In consideration thereof, Al may be added in an amount of 0.02% or more. However, if the Al content is excessive, a coarse oxide or coarse martensite islands may be formed. In consideration thereof, an upper limit of the Al content may be controlled to 0.03%. Preferably, the Al content may be at least 0.022% but not more than 0.025%.

The content of nickel (Ni) may be at least 1.55% but not more than 1.70%.

Ni is an important element to improve low-temperature impact toughness and increase strength. In consideration thereof, Ni may be added in an amount of 1.55% or more. However, if the Ni content is excessive, hardening ability excessively increases to form upper bainite, and thus toughness may deteriorate. In addition, if the Ni content is excessive, manufacturing costs may increase. In consideration thereof, an upper limit of the Ni content may be controlled to 1.70%. Preferably, the Ni content may be at least 1.57% but not more than 1.69%.

The content of chromium (Cr) may be at least 0.05% but not more than 0.07%.

Cr is an element effective for obtaining strength by improving quenchability. In consideration thereof, Cr may be added in an amount of 0.05% or more. However, if the Cr content is excessive, hardening ability excessively increase to form upper bainite, thereby deteriorating toughness. In addition, if the Cr content is excessive, manufacturing costs may increase. In consideration thereof, an upper limit of the Cr content may be controlled to 0.07%. Preferably, the Cr content may be at least 0.052% but not more than 0.061%.

The content of copper (Cu) may be at least 0.05% but not more than 0.08%.

Cu is an element effective for improving strength and obtaining low-temperature toughness. In consideration thereof, Cu may be added in an amount of 0.05% or more. However, if the Cu content is excessive, manufacturing costs may increase. In consideration thereof, an upper limit of the Cu content may be controlled to 0.08%. Preferably, the Cu content may be at least 0.057% but not more than 0.071%.

The content of molybdenum (Mo) may be at least 0.14% but not more than 0.2%.

Mo is an element effective for obtaining strength by improving quenchability. In consideration thereof, Mo may be added in an amount of 0.14% or more. However, because an excess of Mo may form upper bainite due to an excessive increase in hardening ability, toughness may deteriorate. In addition, if the Mo content is excessive, manufacturing costs may increase. In consideration thereof, an upper limit of the Mo content may be controlled to 0.2%. Preferably, the Mo content may be at least 0.146% but not more than 0.196%.

The content of titanium (Ti) may be at least 0.06% but not more than 0.07%.

Ti is an element effective for promoting nucleation of intragranular acicular ferrite by crystallization of a Ti oxide ($TiO_2$) in a welded j oint. In addition, Ti is an element effective for refining crystal grains by carbonitride precipitates. In consideration thereof, Ti may be added in an amount of 0.06% or more. However, an excess of Ti may cause excessive formation of oxides, thereby deteriorating low-temperature impact toughness. In consideration thereof, an upper limit of the Ti content may be controlled to 0.07%. Preferably, the Ti content may be at least 0.06% but not more than 0.063%.

The content of niobium (Nb) may be at least 0.004% but not more than 0.005%.

Nb is an element effective for improving strength by binding to C and N to form Nb-based precipitates. In consideration thereof, Nb may be added in an amount of 0.004% or more. However, an excess of Nb may cause formation of a large amount of martensite islands in a welded joint, thereby deteriorating toughness. In consideration thereof, an upper limit of the Nb content may be controlled to 0.005%.

The content of oxygen (O) may be at least 0.035% but not more than 0.05%.

O is an element reacting with Ti to form a Ti oxide in a molten weld puddle. The Ti oxide may play an effective role in refining crystal grains by promoting nucleation of intragranular acicular ferrite in a welded part. In consideration thereof, O may be added in an amount of 0.035% or more. However, if the O content is excessive, a coarse Ti oxide and other oxides are unnecessarily formed to deteriorate impact toughness in the welded part. In consideration thereof, an upper limit of the O content may be controlled to 0.05%.

The content of nitrogen (N) may be at least 40 ppm but not more than 180 ppm.

N is an element effective for refining crystal grains by preventing prior austenite crystal grains from growing by precipitating TiN. In consideration thereof, N may be added in an amount of 40 ppm or more. However, if the N content is excessive, free nitrogen is generated to deteriorate toughness and AlN precipitates to cause cracks in slabs. In consideration thereof, an upper limit of the N content may be controlled to 180 ppm. Preferably, the N content may be at least 90 ppm but not more than 170 ppm.

The content of phosphorus (P) may be more than 0 ppm but not more than 80 ppm.

P is an element causing embrittlement in crystal grain boundaries. Therefore, an upper limit of the P content may be controlled to 80 ppm to improve resistance to propagation of brittle cracks.

The content of sulfur (S) may be more than 0 ppm but not more than 90 ppm.

S is an element causing embrittlement by forming coarse inclusions. Therefore, an upper limit of the S content may be controlled to 90 ppm to improve resistance to propagation.

The remaining component of the composition of the present disclosure is iron (Fe). However, the composition may include unintended impurities inevitably incorporated from raw materials or surrounding environments, and thus addition of other alloy components is not excluded. These impurities are known to any person skilled in the art of manufacturing and details thereof are not specifically mentioned in the present disclosure.

A high-strength welded joint having improved high-heat-input toughness according to an embodiment of the present disclosure may have a carbon equivalent (Ceq), represented by Expression (1) below, of at least 0.45% but not more than 0.50%.

$$\text{Expression (1): } [C]+[Mn]/6+(Cr+Mo)/5+(Ni+Cu)/15$$

In Expression (1), C, Mn, Cr, Mo, Ni and Cu represent contents of the elements, respectively.

If the carbon equivalent (Ceq) is less than 0.45%, a grain boundary ferrite phase increase to deteriorate low-temperature impact toughness. However, if the carbon equivalent (Ceq) exceeds 0.50%, low-temperature impact toughness may deteriorate due to an increase in the upper bainite phase.

A microstructure of the high-strength welded joint having improved high-heat-input toughness according to an embodiment of the present disclosure may have, in an area fraction, 85% or more of acicular ferrite, 14% or less of grain boundary ferrite, and 0.1% or less of upper bainite.

In order to obtain both strength and toughness of a high-heat-input welded joint, it is essential to refine the structure. Therefore, there is a need to minimize the grain boundary ferrite and the upper bainite phase, both deteriorating low-temperature impact toughness, and to maximize the acicular ferrite phase.

The acicular ferrite phase may be maximized by increasing production of a titanium oxide. In addition, the grain boundary ferrite phase and the upper bainite phase may be minimized by appropriately adjusting the carbon equivalent (Ceq) in a welding heat input according to an embodiment of the present disclosure. That is, both the low-temperature impact toughness and high strength may be obtained by obtaining the microstructure by controlling the alloying elements and the manufacturing method.

Additionally, because the MA phase deteriorates low-temperature impact toughness, the MA content should be minimized. Therefore, the high-strength welded joint having improved high-heat-input toughness according to an embodiment of the present disclosure may have a martensite island-austenite (MA) phase of 0.5% or less.

The MA phase may be minimized by reducing the contents of alloying elements promoting formation of the MA phase such as C, Si, and Nb.

The high-strength welded joint having improved high-heat-input toughness according to an embodiment of the present disclosure may have a yield strength of 500 MPa or more and a tensile strength of 610 to 770 MPa by controlling the microstructure. In addition, the high-strength welded joint having improved high-heat-input toughness according to an embodiment of the present disclosure may have an elongation of 21% or more and a -20°C impact toughness of 50 J or more.

Hereinafter, a method for manufacturing a high-strength welded joint having improved high-heat-input toughness according to another embodiment of the present disclosure will be described.

The method for manufacturing a high-strength welded joint having improved high-heat-input toughness according to an embodiment of the present disclosure includes performing electro-gas welding on a steel material including, in percent by weight (wt%), at least 0.03% but not more than 0.045% of C, at least 1.45% but not more than 1.55% of Mn, at least 0.3% but not more than 0.4% of Si, at least 0.02% but not more than 0.03% of Al, at least 1.55% but not more than 1.70% of Ni, at least 0.05% but not more than 0.07% of Cr, at least 0.05% but not more than 0.08% of Cu, at least 0.14% but not more than 0.2% of Mo, at least 0.06% but not more than 0.07% of Ti, at least 0.004% but not more than 0.005% of Nb, at least 0.035% but not more than 0.05% of O, at least 40 ppm but not more than 180 ppm of N, more than 0 ppm but not more than 80 ppm of P, more than 0 ppm but not more than 90 ppm of S, and the balance being iron (Fe) and other inevitable impurities, and having a carbon equivalent (Ceq), represented by Expression (1) below, of at least 0.45% but not more than 0.50%.

$$\text{Expression (1): } [C]+[Mn]/6+(Cr+Mo)/5+(Ni+Cu)/15$$

In Expression (1), C, Mn, Cr, Mo, Ni and Cu represent contents of the elements, respectively.

Reasons for numerical limitations on the contents of alloying elements of the composition and Expression (1) are as described above. Hereinafter, the manufacturing method will be described in more detail.

The method for manufacturing a high-strength welded joint having improved high-heat-input toughness according to an embodiment of the present disclosure may include performing electro-gas welding to improve productivity of the welded joint.

The electro-gas welding may be performed with a heat input capacity of 160 KJ/cm.

In general, in the case of adding large amounts of alloying elements, a bainite single phase is formed in a welded joint and a heat-affected region, and thus toughness of a welded part may deteriorate in the case where heat input capacity increases. However, in the present disclosure, a welded joint having excellent toughness may be obtained by controlling the microstructure even at a high heat input capacity of 160 KJ/cm or more.

Hereinafter, the present disclosure will be described in more detail through examples. However, it is necessary to note that the following examples are only intended to illustrate the present disclosure in more detail and are not intended to limit the scope of the present disclosure. This is because the scope of the present disclosure is determined by matters described in the claims and able to be reasonably inferred therefrom.

{Examples}

Steel materials having various ranges of alloying elements shown in Table 1 below were subject to electro-gas welding with a heat input capacity of 160 KJ/cm to prepare welded joints.

Table 1

| Category | Alloying elements | | | | | | | | | | | | | |
|---|---|---|---|---|---|---|---|---|---|---|---|---|---|---|
| | C | Si | Mn | P | S | Cr | Ni | Cu | Mo | Al | Nb | Ti | O | N |
| Example 1 | 0.043 | 0.396 | 1.49 | 0.008 | 0.009 | 0.061 | 1.57 | 0.071 | 0.196 | 0.024 | 0.005 | 0.06 | 0.043 | 0.017 |
| Example 2 | 0.032 | 0.348 | 1.55 | 0.008 | 0.009 | 0.052 | 1.69 | 0.057 | 0.146 | 0.023 | 0.004 | 0.063 | 0.039 | 0.009 |
| Comparative Example 1 | 0.061 | 0.334 | 1.68 | 0.013 | 0.013 | 0.071 | 0.133 | **0.071** | 0.161 | 0.007 | 0.009 | **0.016** | 0.046 | 0.004 |
| Comparative Example 2 | 0.051 | 0.343 | 1.67 | 0.01 | 0.011 | 0.045 | 0.85 | **0.059** | 0.206 | 0.015 | 0.006 | **0.02** | 0.048 | 0.005 |
| Comparative Example 3 | 0.05 | 0.473 | 1.79 | 0.014 | 0.01 | 0.056 | 0.98 | **0.081** | 0.191 | 0.023 | 0.008 | **0.029** | 0.039 | 0.0045 |
| Comparative Example 4 | **0.048** | 0.194 | **1.68** | 0.01 | 0.008 | 0.046 | 2.22 | 0.053 | 0.134 | 0.008 | 0.003 | 0.057 | **0.026** | 0.0096 |
| Comparative Example 5 | **0.052** | 0.44 | **1.79** | 0.014 | 0.009 | 0.045 | 1.79 | 0.054 | **0.207** | 0.025 | 0.006 | 0.069 | 0.038 | 0.0075 |

In Table 2 below, carbon equivalents, area fractions of acicular ferrite, area fractions of grain boundary ferrite, area fractions of upper bainite, and area fractions of MA are shown.

The carbon equivalent was calculated by using Expression (1) below.

$$\text{Expression (1): } [C]+[Mn]/6+(Cr+Mo)/5+(Ni+Cu)/15$$

In Expression (1), C, Mn, Cr, Mo, Ni and Cu represent contents of the elements, respectively.

The area fraction of the acicular ferrite, the area fraction of the grain boundary ferrite, the area fraction of the upper bainite, and the area fraction of the MA were measured by the ASTM E562-11 method after imaging using an optical microscope.

Table 2

| Category | Carbon equivalent (%) | Area fraction of acicular ferrite (%) | Area fraction of grain boundary ferrite (%) | Area fraction of upper bainite (%) | Area fraction of MA (%) |
|---|---|---|---|---|---|
| Example 1 | 0.45 | 88 | 12 | 0 | 3 |
| Example 2 | 0.45 | 86 | 14 | 0 | 2.7 |
| Comparative Example 1 | 0.40 | 76 | 24 | 0 | 2.6 |
| Comparative Example 2 | 0.47 | 77 | 13 | 10 | 3.1 |
| Comparative Example 3 | 0.52 | 52 | 13 | 35 | 4.3 |
| Comparative Example 4 | 0.45 | 16 | 0 | 84 | 5.6 |
| Comparative Example 5 | 0.45 | 0 | 0 | 100 | 6.7 |

In Table 3 below, yield strength, tensile strength, elongation, and -20°C impact toughness are shown.

The yield strength, tensile strength, and elongation were measured at room temperature by using a ZWICK Z250 tensile tester of Zwick/Roell.

The -20°C impact toughness was measured at a low temperature of - 20°C by using an impact tester of Zwick Roell.

Table 3

| Category | Yield strength (MPa) | Tensile strength (MPa) | Elongation (%) | -20°C impact toughness (J) |
|---|---|---|---|---|
| Example 1 | 505.6 | 634.5 | 21.5 | 80.8 |
| Example 2 | 513.6 | 660.4 | 22.2 | 52.8 |
| Comparative Example 1 | **453.8** | **586.8** | 30.5 | 67.8 |
| Comparative Example 2 | **480.2** | **609** | 29.5 | 103.0 |
| Comparative Example 3 | **489** | 722.8 | 23.8 | **46.6** |
| Comparative Example 4 | 560.3 | **814.6** | **18.2** | **17.9** |
| Comparative Example 5 | 586.9 | **839.9** | **16.9** | **32.6** |

Referring to Tables 2 and 3, Examples 1 and 2 satisfied the composition of alloying elements, the content ranges, Expression (1), and the fractions of the microstructure suggested by the present disclosure. Therefore, Examples 1 and 2 satisfied a yield strength of 500 MPa or more, a tensile strength of 610 to 770 MPa, an elongation of 21% or more, and a -20°C impact toughness of 50 J or more. That is, both low-temperature impact toughness and high strength were realized in Examples 1 and 2.

However, in Comparative Examples 1 and 2, the contents of Ni and Ti were low and the carbon equivalents were relatively low. Therefore, Comparative Examples 1 and 2 could not satisfy the yield strength and tensile strength suggested by the present disclosure due to high area fraction of grain boundary ferrite.

In addition, the yield strength was low in Comparative Example 3 due to the low contents of Ni and Ti. In addition, due to the high carbon equivalent of Comparative Example 3, the area fraction of an upper bainite fraction was high, resulting in deterioration of impact toughness.

In addition, the contents of C, Mn and/or Mo were high and the carbon equivalents were high in Comparative Examples 4 and 5. Therefore, Comparative Examples 4 and 5 showed high fractions of the upper bainite and inferior elongation and -20°C impact toughness.

[Industrial Applicability]

According to an embodiment of the present disclosure, provided are a high-strength welded joint having improved high-heat-input toughness capable of realizing both low-temperature impact toughness and high strength by refining crystal grains by controlling a microstructure and a method for manufacturing the same. Therefore, they may be used in various industrial fields such as various home appliances.

**Claims**

1.  A high-strength welded joint having improved high-heat-input toughness comprising, in percent by weight (wt%), at least 0.03% but not more than 0.045% of C, at least 1.45% but not more than 1.55% of Mn, at least 0.3% but not more than 0.4% of Si, at least 0.02% but not more than 0.03% of Al, at least 1.55% but not more than 1.70% of Ni, at least 0.05% but not more than 0.07% of Cr, at least 0.05% but not more than 0.08% of Cu, at least 0.14% but not more than 0.2% of Mo, at least 0.06% but not more than 0.07% of Ti, at least 0.004% but not more than 0.005% of Nb, at least 0.035% but not more than 0.05% of O, at least 40 ppm but not more than 180 ppm of N, more than 0 ppm but not more than 80 ppm of P, more than 0 ppm but not more than 90 ppm of S, and the balance being iron (Fe) and other inevitable impurities, and
    having, in an area fraction, 85% or more of acicular ferrite, 14% or less of grain boundary ferrite, and 0.1% or less of upper bainite.

2.  The high-strength welded joint according to claim 1, wherein a carbon equivalent (Ceq) represented by Expression (1) below is at least 0.45% but not more than 0.50%:

$$\text{Expression (1): } [C]+[Mn]/6+(Cr+Mo)/5+(Ni+Cu)/15$$

(wherein in Expression (1), C, Mn, Cr, Mo, Ni and Cu represent contents (wt%) of the elements, respectively).

3.  The high-strength welded joint according to claim 1, wherein a martensite island-austenite (MA) phase is 0.5% or less.

4.  The high-strength welded joint according to claim 1, wherein a yield strength is 500 MPa or more.

5.  The high-strength welded joint according to claim 1, wherein a tensile strength is 610 to 770 MPa.

6.  The high-strength welded joint according to claim 1, wherein an elongation is 21% or more.

7.  The high-strength welded joint according to claim 1, wherein a -20°C impact toughness is 50 J or more.

8.  A method for manufacturing a high-strength welded joint having improved high-heat-input toughness, the method comprising:

    performing electro-gas welding on a steel material including, in percent by weight (wt%), at least 0.03% but not more than 0.045% of C, at least 1.45% but not more than 1.55% of Mn, at least 0.3% but not more than 0.4% of Si, at least 0.02% but not more than 0.03% of Al, at least 1.55% but not more than 1.70% of Ni, at least 0.05% but not more than 0.07% of Cr, at least 0.05% but not more than 0.08% of Cu, at least 0.14% but not more than 0.2% of Mo, at least 0.06% but not more than 0.07% of Ti, at least 0.004% but not more than 0.005% of Nb, at least 0.035% but not more than 0.05% of O, at least 40 ppm but not more than 180 ppm of N, more than 0 ppm but not more than 80 ppm of P, more than 0 ppm but not more than 90 ppm of S, and the balance being iron (Fe) and other inevitable impurities, and having a carbon equivalent (Ceq), represented by Expression (1) below, of at least 0.45% but not more than 0.50%:

$$\text{Expression (1): } [C]+[Mn]/6+(Cr+Mo)/5+(Ni+Cu)/15$$

(wherein in Expression (1), C, Mn, Cr, Mo, Ni and Cu represent contents (wt%) of the elements, respectively).

9. The method according to claim 8, wherein the electro-gas welding is performed with a heat input capacity of 160 KJ/cm or more.

## INTERNATIONAL SEARCH REPORT

| International application No. |
| --- |
| **PCT/KR2022/020863** |

| A. | CLASSIFICATION OF SUBJECT MATTER |
| --- | --- |
| | **B23K 35/30**(2006.01)i; **B23K 9/16**(2006.01)i |

According to International Patent Classification (IPC) or to both national classification and IPC

| B. | FIELDS SEARCHED |
| --- | --- |

Minimum documentation searched (classification system followed by classification symbols)

B23K 35/30(2006.01); B23K 9/23(2006.01); C22C 38/00(2006.01); C22C 38/04(2006.01); C22C 38/14(2006.01); C22C 38/38(2006.01); C22C 38/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 용접(welding), 페라이트(ferrite), 베이나이트(bainite), 오스테나이트(austenite), 마르텐사이트(martensite), 입열(heat input), 인성(toughness), 연신율(flexibility), 항복강도(yield strength), 일렉트로 가스 용접(electro gas welding)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2009-0062598 A (POSCO) 17 June 2009 (2009-06-17)<br>See paragraphs [0001], [0008], [0009], [0020], [0021], [0025]-[0037], [0040]-[0052], [0063]-[0068], [0071], [0072], [0080], [0086], [0088], [0089], [0091]-[0094] and [0097]. | 1-9 |
| Y | KR 10-2018-0074415 A (POSCO) 03 July 2018 (2018-07-03)<br>See paragraphs [0016], [0018]-[0021] and [0032]. | 1-9 |
| A | JP 2016-172892 A (JFE STEEL CORP.) 29 September 2016 (2016-09-29)<br>See claims 1-6. | 1-9 |
| A | JP 2013-147740 A (JFE STEEL CORP.) 01 August 2013 (2013-08-01)<br>See claims 1-3. | 1-9 |
| A | JP 2010-094686 A (NIPPON STEEL CORP.) 30 April 2010 (2010-04-30)<br>See claims 1-3, 5, 7, 9 and 10. | 1-9 |

☐ Further documents are listed in the continuation of Box C.   ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **23 March 2023** | **23 March 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/020863**

| Patent document cited in search report | | | Publication date (day/month/year) | Patent family member(s) | | | Publication date (day/month/year) |
|---|---|---|---|---|---|---|---|
| KR | 10-2009-0062598 | A | 17 June 2009 | CN | 101918607 | A | 15 December 2010 |
| | | | | JP | 2011-506766 | A | 03 March 2011 |
| | | | | JP | 5487114 | B2 | 07 May 2014 |
| | | | | KR | 10-0957940 | B1 | 13 May 2010 |
| | | | | WO | 2009-075542 | A2 | 18 June 2009 |
| KR | 10-2018-0074415 | A | 03 July 2018 | | None | | |
| JP | 2016-172892 | A | 29 September 2016 | JP | 6308151 | B2 | 11 April 2018 |
| JP | 2013-147740 | A | 01 August 2013 | JP | 5966907 | B2 | 10 August 2016 |
| JP | 2010-094686 | A | 30 April 2010 | JP | 5000619 | B2 | 15 August 2012 |

Form PCT/ISA/210 (patent family annex) (July 2022)